# EUROPEAN PATENT APPLICATION

(11) **EP 4 693 734 A1**
(43) Date of publication of application: **11.02.2026**
(21) Application number: 24211508.7
(22) Date of filing: 07.11.2024
(51) Int. Cl.: H01Q 1/32, H01P 5/103, H01Q 1/22

(54) **RF ENERGY DIRECT LAUNCH VERTICAL FROM MMIC TO AIR WAVEGUIDE SYSTEM**

(30) Priority: 06.08.2024 US 202418795392
(71) Applicant: Aptiv Technologies AG, 8200 Schaffhausen (CH)
(72) Inventor: GUPTA, Biswadeep Das, Noblesville, IN, 46062 (US); OWENS, Eric, Carmel, IN, 46033 (US)
(74) Representative: Manitz Finsterwald Patent- und Rechtsanwaltspartnerschaft mbB

(57) **Abstract**

An automotive radar system includes a printed circuit board (PCB) formed from a plurality of layers including a first outer layer, a second outer layer, and a plurality of intermediate layers. A coaxial structure extends from the first outer layer to the second outer layer. A monolithic microwave integrated circuit (MMIC) is mounted to the first outer layer and connected to the coaxial structure. A first waveguide is formed in the second outer layer, and a second waveguide is mounted to the second outer layer over the first waveguide. The coaxial structure forms a direct energy path from the MMIC to the first waveguide.

## Description

### BACKGROUND

This section provides background information related to the present disclosure which is not necessarily prior art.

Automotive radar sensors are used in vehicle sensing systems to determine information about objects in the environment of the vehicle such as the location, size, orientation, velocity, and acceleration of objects in the environment of the vehicle. The sensed information can, for example, be used by other vehicle systems, such as autonomous driving systems and/or advanced driver assistance systems (ADAS), etc., to control steering, braking, throttle, and/or other vehicle systems.

Some prior automotive radar systems use printed circuit board (PCB) antennas wherein the radar system includes a control PCB that includes processing components for the radar system, such as one or more microprocessors, one or more power supplies, other integrated circuits (ICs) such as monolithic microwave integrated circuits (MMIC), etc., as well as an additional antenna PCB attached to the control PCB and connected to the MMIC. The additional antenna PCB is made of high-performance radio frequency (RF) material and includes antenna components that function as the antenna for the radar system. The PCB antenna radiators, for example, can be implemented using microstrip patches, microstrip stubs, microstrip meander lines, planar microstrip antennas/probes and the like. The antenna PCB can be attached to the control PCB using adhesive.

Typically, a waveguide is positioned over a planar microstrip probe. The waveguide collects and guides RF energy from the probe. The RF energy is then directed from the radar system. In some cases, the waveguide transitions the RF energy vertically from the planar microstrip probe. In such systems, the transition results in an upward firing of the RF energy. With this arrangement, the MMIC and the planar microstrip probe can reside on the same side of the PCB.

### SUMMARY

This section provides a general summary of the disclosure, and is not a comprehensive disclosure of its full scope or all of its features.

An automotive radar system in accordance with the present disclosure, includes a printed circuit board (PCB) formed from a plurality of layers including a first outer layer, a second outer layer, and a plurality of intermediate layers. A coaxial structure extends from the first outer layer to the second outer layer. A monolithic microwave integrated circuit (MMIC) is mounted to the first outer layer and connected to the coaxial structure. A first waveguide is formed in the second outer layer, and a second waveguide is mounted to the second outer layer over the first waveguide. The coaxial structure forms a direct energy path from the MMIC to the first waveguide.

In other features, the MMIC is connected to the coaxial structure through a ball grid array (BGA) ball.

In other features, the first waveguide is a ridge waveguide formed in the second outer layer.

In other features, the ridge waveguide includes a first portion having a first end and a second end, a second portion formed at the first end, and a third portion formed at the second end, the first portion having a first dimension, the second portion having a second dimension, and the third portion having a third dimension, the second dimension and the third dimension being distinct from the first dimension.

In other features, the first dimension defines a first width, the second dimension defines a second width, and the third dimension defines a third width, the second width and third width being greater than the first width forming a dog bone shaped slot for the ridge waveguide.

In other features, a gap surrounds the coaxial structure, the gap extending from the first outer layer of the PCB through the plurality of intermediate layers.

In other features, the gap includes an annular geometry through select ones of the intermediate layers.

In other features, the annular geometry in one of the select ones of the intermediate layers includes a semi-annular geometry.

In other features, the one of the select ones of the plurality of intermediate layer is the one of the plurality of intermediate layers directly adjacent to the second outer layer.

In other features, direct energy path from the MMIC to the first waveguide is a substantially linear unobstructed path through the PCB to the first waveguide.

A method of emitting RF energy, in accordance with the present disclosure includes generating RF energy having a first mode in monolithic microwave integrated circuit (MMIC) mounted to a first outer layer of a printed circuit board (PCB), passing the RF energy having the first mode through a direct energy path defined by a coaxial structure passing through a plurality of intermediate layers of the PCB to a first waveguide formed in a second outer layer of the PCB, transforming the RF energy from the first mode to a second mode in the first waveguide, and directing the RF energy in the second mode through a second waveguide mounted to the second outer layer over the first waveguide.

In other features, passing the RF energy along the direct energy path includes directing the RF energy through the PCB along a substantially linear unobstructed pathway formed in the PCB between the first outer layer and the second outer layer.

In other features, transforming the RF energy from the first mode to the second mode in the first waveguide includes transforming the RF energy from a transverse magnetic (TM) mode produced by the coaxial structure to a transverse electric (TE) mode at the second waveguide.

In other features, transforming the RF energy from the first mode to the second mode in the first waveguide includes directing the RF energy across a planar ridge waveguide formed in the second outer layer of the PCB.

In other features, directing the RF energy across the planar ridge waveguide includes passing the RF energy across a dog bone shaped slot formed in the second outer layer.

In other features, the coaxial structure is surrounded with a plurality of blind vias formed in the first outer layer to confining the RF energy to the direct energy path.

In other features, the first waveguide is surrounded with a plurality of blind vias formed in the second outer layer to confining the RF energy to the direct energy path.

In other features, the MMIC is connected to the plurality of blind vias formed in the first outer layer through a plurality of ground ball grid array (BGA) balls.

In other features, generating the RF energy having a first mode in monolithic microwave integrated circuit (MMIC) includes connecting the MMIC to the coaxial structure at the first outer layer through a single ball grid array (BGA) ball.

In other features, passing the RF energy having the first mode through a direct energy path includes passing the RF energy through an annular gap defined about the coaxial structure through a first portion of the plurality of intermediate layers and through a semi-annular gap surrounding a portion of the coaxial structure through one of the plurality of intermediate layers positioned directly adjacent to the second outer layer.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a cross sectional side view of an automotive radar system, in accordance with the present disclosure;
FIG. 2 is a disassembled view of the automotive radar system of FIG. 1, in accordance with the present disclosure;
FIG. 3 is a partial perspective view of a monolithic microwave integrated circuit (MMIC) mounted to a printed circuit board (PCB) of the automotive radar system of FIG. 1, in accordance with the present disclosure;
FIG. 4 is a plan view of a first outer layer of the PCB, in accordance with the present disclosure;
FIG. 5 is a plan view of one of a plurality of intermediate layers of the PCB, in accordance with the present disclosure;
FIG. 6 is a plan view of one of the plurality of intermediate layers of the PCB, in accordance with the present disclosure; and
FIG. 7 is a plan view of a ridge waveguide formed in a second outer layer of the PCB.

Corresponding reference numerals indicate corresponding parts throughout the several views of the drawings.

### DETAILED DESCRIPTION

Example embodiments will now be described more fully with reference to the accompanying drawings.

While radar systems formed according to the present disclosure are described in the context of electric vehicles, the radar systems can be used in stationary applications and/or other applications.

Radar systems direct RF energy from a source towards a target. RF energy reflected from the target is received and processed to determine a wide variety of information. The information can include target location, target distance, target speed, and the like. In the source, the RF energy travels through an interconnect path from the MMIC to the waveguide. The RF energy leaves the MMIC and transitions to traces in the PCB. The RF energy then travels along the traces from the MMIC toward the waveguide/antenna. Once again, the RF undergoes a transition, this time from the traces to the waveguide/antenna. The RF energy then travels through the waveguide towards a target. Energy losses develop along the interconnect path. Energy losses at the transitions are greater than the energy losses in the traces. Reducing energy losses will increase radar efficiency and sensitivity.

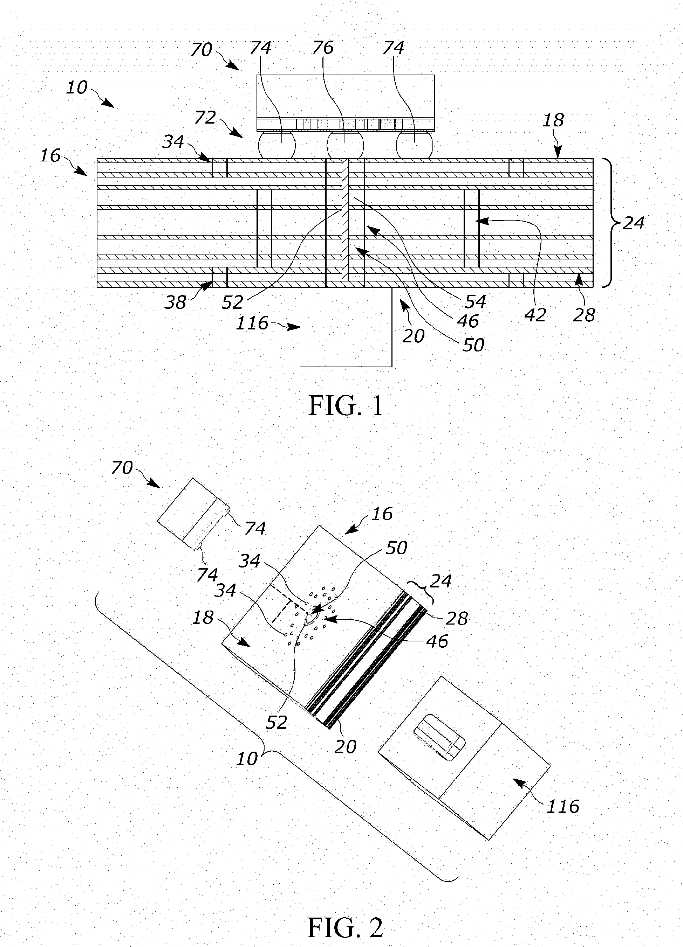

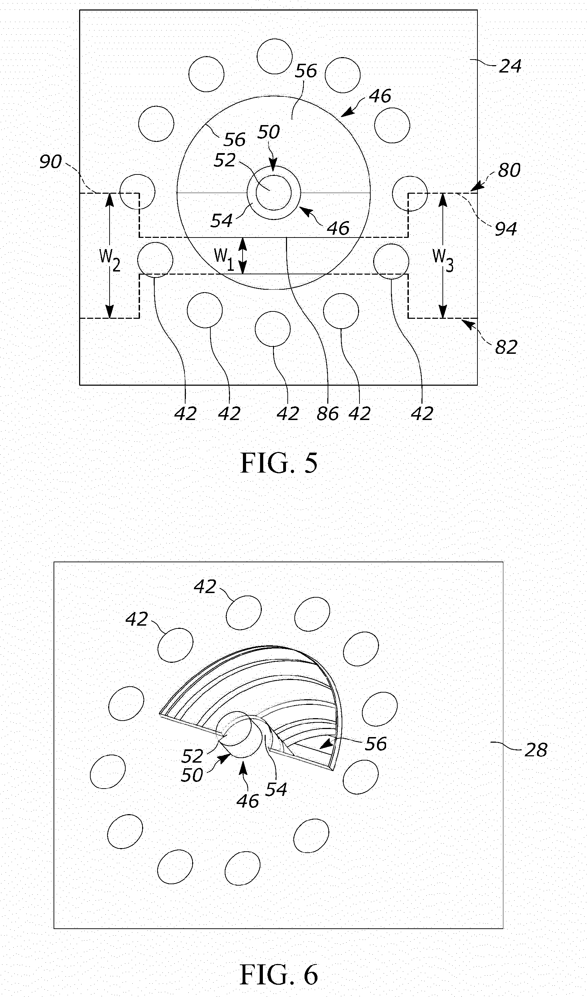

An automotive radar system, in accordance with the present disclosure, is indicated generally at 10 in FIGS. 1 and 2. Referring to FIGS. 2, 3, 4, and 5 with continued reference to FIGS. 1 and 2, radar system 10 includes a printed circuit board (PCB) 16 including a first outer layer 18, a second outer layer 20, and a plurality of intermediate layers 24. One of the plurality of intermediate layers 24 forms a transition layer 28 such as shown in FIG. 6. PCB 16 includes a first plurality of blind vias 34 formed in first outer layer 18, a second plurality of blind vias 38 formed in second outer layer 20, and a plurality of buried vias formed in select ones of the plurality of intermediate layers 24 as shown in FIGS. 1 and 5.

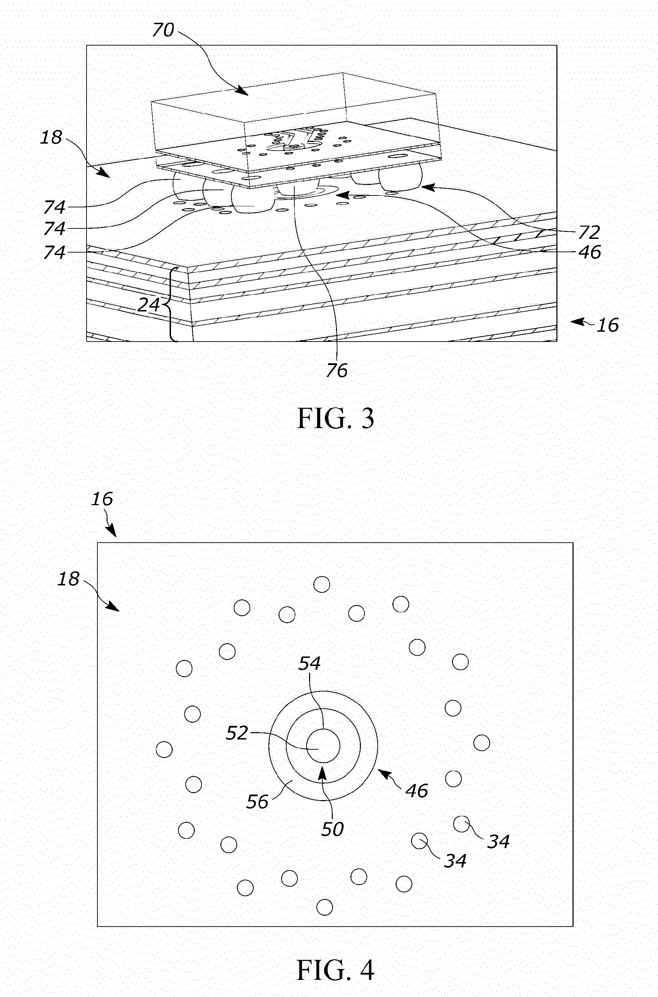

In accordance with the present disclosure, PCB 16 includes a coaxial structure 46 that extends from first outer layer 18 to second outer layer 20. Coaxial structure 46 includes a through via 50 having a central portion or core 52 surrounded by a pad 54 and a gap 56. Coaxial structure 46 is also surrounded by the first plurality of blind vias 34. Gap 56 may be filled with a selected dielectric material. Gap 56 has a substantially annular geometry in first outer layer 18 and each of the plurality of intermediate layers 24 (FIGS. 4 and 5) except for transition layer 28. In transition layer 28, as shown in FIG. 6, gap 56 includes a substantially semi-annular geometry.

Referring to FIGS. 1 and 3, radar system 10 includes a monolithic microwave integrated circuit (MMIC) 70 mounted to first outer layer 18. MMIC 70 is electrically coupled to PCB 16 through plurality of ball grid array (BGA) balls 72. BGA balls 72 includes a plurality of ground BGA balls 74 that electrically connect MMIC 70 with a ground plane (not separately labeled) through the first plurality of blind vias 34 and a single BGA ball 76 that electrically connects MMIC 70 with core 52 of coaxial structure 46.

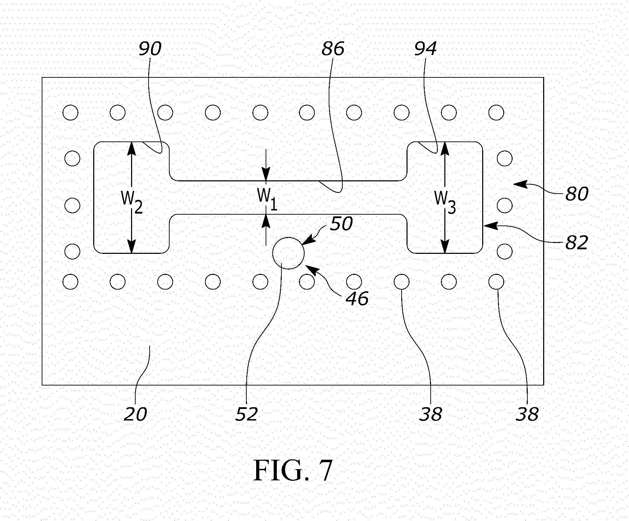

As will be detailed more fully herein, MMIC 70, when energized, emits an RF energy field that flows through PCB 16 along a direct energy path as shown in FIG 1. The term "direct energy path" should be understood to describe that the RF energy flows along a substantially linear, uninterrupted, energy pathway from MMIC 70 through PCB 16 and then passes outward through a planar waveguide 80 (FIG. 7) formed in second outer layer 20.

Referring to FIG. 7 planar waveguide 80 takes the form of a ridge waveguide 82 including a first portion 86 having a first dimension, a second portion 90 having a second dimension, and a third portion 94 having a third dimension. The first dimension defines a first width W1, the second dimension defines a second width W2, and the third dimension defines a third width W3. The second width W2, and the third width W3 are greater than the first width W1 thereby imposing a "dog bone" shape on ridge waveguide 82. With this configuration, ridge waveguide 82 transforms RF energy produced by the coaxial structure 46 formed in PCB 16 as a transverse magnetic (TM) mode RF energy signal into RF energy having a transverse electric (TE) mode. The RF energy passes from ridge waveguide 82 into a second waveguide 116 mounted on second outer layer 20. Second waveguide 116 is shown in the form of an air waveguide.

In accordance with the present disclosure, coaxial structure 46 formed in PCB 16 is energized and produces TM mode RF energy. The RF energy passes directly through PCB 12 along a substantially linear unobstructed path to ridge waveguide 82. The first plurality of blind vias 34 and the second plurality of blind vias 38 surround the RF energy passing through PCB 12 confining the RF energy to the substantially linear unobstructed path. The RF energy passes across ridge waveguide 82 and transforms into TE mode RF energy. TE mode RF energy than passes from air waveguide 116 and is directed towards a target. By launching the RF energy directly from MMIC 70 and eliminating traces and associated transitions between the source of RF energy and the waveguide, losses are in some cases eliminated and in other cases significantly reduced.

Example embodiments are provided so that this disclosure will be thorough and will fully convey the scope to those who are skilled in the art. Specific details are set forth, including examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

The phrase "at least one of A, B, and C" should be construed to mean a logical (A OR B OR C), using a non-exclusive logical OR, and should not be construed to mean "at least one of A, at least one of B, and at least one of C." The term "set" does not necessarily exclude the empty set. The term "non-empty set" may be used to indicate exclusion of the empty set. The term "subset" does not necessarily require a proper subset. In other words, a first subset of a first set may be coextensive with (equal to) the first set.

The terms "about" and "substantially" are intended to include the degree of error associated with measurement of the particular quantity based upon the equipment available at the time of filing the application. For example, "about" and "substantially" can include a range of t 8% of a given value.

Unless defined otherwise, technical and scientific terms used herein have the same meaning as is commonly understood by one of skill in the art to which this disclosure belongs.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An automotive radar system comprising:
a printed circuit board (PCB) formed from a plurality of layers including a first outer layer, a second outer layer, and a plurality of intermediate layers;
a coaxial structure extending from the first outer layer to the second outer layer;
a monolithic microwave integrated circuit (MMIC) mounted to the first outer layer and connected to the coaxial structure;
a first waveguide formed in the second outer layer; and
a second waveguide mounted to the second outer layer over the first waveguide, wherein the coaxial structure forms a direct energy path from the MMIC to the first waveguide.

2. The automotive radar system according to claim 1, wherein the MMIC is connected to the coaxial structure through a ball grid array (BGA) ball.

3. The automotive radar system according to claim 1 or 2, wherein the first waveguide is a ridge waveguide formed in the second outer layer.

4. The automotive radar system according to claim 3, wherein the ridge waveguide includes a first portion having a first end and a second end, a second portion formed at the first end, and a third portion formed at the second end, the first portion having a first dimension, the second portion having a second dimension, and the third portion having a third dimension, the second dimension and the third dimension being distinct from the first dimension.

5. The automotive radar system according to claim 4, wherein the first dimension defines a first width, the second dimension defines a second width, and the third dimension defines a third width, the second width and third width being greater than the first width forming a dog bone shaped slot for the ridge waveguide.

6. The automotive radar system according to any one of the preceding claims, wherein the coaxial structure includes a through via surrounded by a gap, the gap extending from the first outer layer of the PCB through the plurality of intermediate layers,
wherein the gap in particular includes an annular geometry through select ones of the intermediate layers,
wherein the annular geometry in one of the select ones of the intermediate layers in particular includes a semi-annular geometry.

7. The automotive radar system according to claim 6, wherein the one of the select ones of the plurality of intermediate layer is the one of the plurality of intermediate layers directly adjacent to the second outer layer.

8. The automotive radar system according to any one of the preceding claims, wherein direct energy path from the MMIC to the first waveguide is a substantially linear unobstructed path through the PCB to the first waveguide.

9. A method of emitting RF energy comprising:
generating RF energy having a first mode in monolithic microwave integrated circuit (MMIC) mounted to a first outer layer of a printed circuit board (PCB);
passing the RF energy having the first mode through a direct energy path defined by a coaxial structure passing through a plurality of intermediate layers of the PCB to a first waveguide formed in a second outer layer of the PCB;
transforming the RF energy from the first mode to a second mode in the first waveguide; and
directing the RF energy in the second mode through a second waveguide mounted to the second outer layer over the first waveguide.

10. The method of claim 9, wherein passing the RF energy along the direct energy path includes directing the RF energy through the PCB along a substantially linear unobstructed pathway formed in the PCB between the first outer layer and the second outer layer.

11. The method of claim 9 or 10, wherein transforming the RF energy from the first mode to the second mode in the first waveguide includes transforming the RF energy from a transverse magnetic (TM) mode produced by the MMIC to a transverse electric (TE) mode at the second waveguide.

12. The method of any one of claims 9 to 11, wherein transforming the RF energy from the first mode to the second mode in the first waveguide includes directing the RF energy across a planar ridge waveguide formed in the second outer layer of the PCB,
wherein directing the RF energy across the planar ridge waveguide in particular includes passing the RF energy across a dog bone shaped slot formed in the second outer layer.

13. The method of any one of claims 9 to 12, further comprising: surrounding the coaxial structure with a plurality of blind vias formed in the first outer layer to confining the RF energy to the direct energy path,
in particular further comprising: surrounding the first waveguide with a plurality of blind vias formed in the second outer layer to confining the RF energy to the direct energy path, and in particular
further comprising: connecting the MMIC to the plurality of blind vias formed in the first outer layer through a plurality of ground ball grid array (BGA) balls.

14. The method of any one of claims 9 to 13, wherein generating the RF energy having a first mode in monolithic microwave integrated circuit (MMIC) includes connecting the MMIC to the coaxial structure at the first outer layer through a single ball grid array (BGA) ball.

15. The method of any one of claims 9 to 14, wherein passing the RF energy having the first mode through a direct energy path includes passing the RF energy through an annular gap defined about the coaxial structure through a first portion of the plurality of intermediate layers and through a semi-annular gap surrounding a portion of the coaxial structure through one of the plurality of intermediate layers positioned directly adjacent to the second outer layer.
